# EUROPEAN PATENT APPLICATION

(11) **EP 2 256 647 A1**
(43) Date of publication of application: **01.12.2010**
(21) Application number: 09014463.5
(22) Date of filing: 19.11.2009
(51) Int. Cl.: G06F 17/30, G11B 27/00

(54) **Thumbnail generating device and thumbnail generating method**

(30) Priority: 29.05.2009 JP 2009131565
(71) Applicant: Kabushiki Kaisha Toshiba, Minato-ku Tokyo (JP)
(72) Inventor: Numajiri, Yutaka, Tokyo (JP); Kato, Nobuhiro, Tokyo (JP)
(74) Representative: HOFFMANN EITLE

(57) **Abstract**

According to an aspect of the present invention, there is provided a thumbnail generating device including: a still image generating module that extracts a part of a first movie to generate a plurality of still images; a movie generating module that extracts a part of the first movie to generate a plurality of second movies; a thumbnail display generating module that generates a thumbnail display to be displayed on a video display device by arranging a plurality of small thumbnails, a first part of the small thumbnails corresponding to the still images, a second part of small thumbnails corresponding to the second movies; and an output module that outputs the generated thumbnail display to the video display device.

## Description

### CROSS-REFERENCE TO RELATED APPLICATIONS

This application is based upon and claims the benefit of priority from Japanese Patent Application No. 2009-131565, filed on May 29, 2009, the entire contents of which are incorporated herein by reference.

### BACKGROUND

### 1. Field

An aspect of the present invention relates to a thumbnail generating device and a thumbnail generating method, and more particularly, to a thumbnail generating device and a thumbnail generating method, by which a thumbnail display to be displayed in movie is generated.

### 2. Description of the Related Art

A thumbnail display in which reduced images are arranged on one screen is performed in a video display device or the like for allowing a user to confirm the plurality of images in a single viewing. The thumbnail display is very convenient and is used in various fields.

For example, a picture list generating device is disclosed, in which still images are extracted from a continuous movie at a given time interval and a thumbnail display of the still images is generated. When a user selects one of the thumbnail-displayed still images, the movie following the still image is displayed (see JP-H05-122604-A).

As described in JP-H05-122604-A, for example, a thumbnail is displayed for each chapter, and a user selects a desired scene based on the thumbnails. At this time, when each thumbnail is displayed in movie rather than displayed in still image, the user can easily recognize what scene displayed.

However, when all the thumbnails are displayed in movie, the information processing amount becomes too large for the display. Accordingly, in a general video reproducing device, it is difficult to smoothly display all the movies.

### SUMMARY

An object of the invention is to provide a thumbnail generating device and a thumbnail generating method, by which a thumbnail display to be displayed in movie is generated without increasing the information processing amount for display.

According to an aspect of the present invention, there is provided a thumbnail generating device including: a still image generating module that extracts a part of a first movie to generate a plurality of still images; a movie generating module that extracts a part of the first movie to generate a plurality of second movies; a thumbnail display generating module that generates a thumbnail display to be displayed on,a video display device by arranging a plurality of small thumbnails, a first part of the small thumbnails corresponding to the still images, a second part of small thumbnails corresponding to the second movies; and an output module that outputs the generated thumbnail display to the video display device.

The thumbnail generating device may further include: a movie area generating module that generates a movie area on the thumbnail display, the second part of the small thumbnails corresponding to the second movies being included within the movie area. The output module may output the generated movie area to the video display device.

The thumbnail generating device may further include: a movie area moving module that moves the movie area within the thumbnail display so that the movie area include the first part of the small thumbnails corresponding to the still images. The thumbnail display generating module may generate, upon a movement of the movie area, a thumbnail display so that the small thumbnails included in the movie correspond to the second movies.

The thumbnail generating device may further include: a selection module that selects one of the small thumbnails of the thumbnail display; and a generation module that generates a first movie display following the still image or the second movie corresponding to the selected small thumbnail so as to be displayed in a size larger than that of the small thumbnail. The output module may output the generated first movie display to the video display device.

The thumbnail generating device may further include: a chapter division module that divides the first movie into chapters. The still image generating module may extract a third movie included in the divided chapters to generate the still images. The movie generating module may extract the third movie included in the divided chapters to generate the second movies.

According to another aspect of the present invention, there is provided a thumbnail generating device including: a still image generating module that extracts respective parts of a plurality of first movies to generate a plurality of still images, the first movies being different from one another; a movie generating module that extracts respective parts of the first movies to generate a plurality of second movies; a thumbnail display generating module that generates a thumbnail display to be displayed on a video display device by arranging a plurality of small thumbnails, a first part of the small thumbnails corresponding to the still images, a second part of small thumbnails corresponding to the second movies; and an output module that outputs the generated thumbnail display to the video display device.

According to still another aspect of the present invention, there is provided a thumbnail generating method including: extracting a part of a first movie to generate a plurality of still images by a still image generating module; extracting a part of the first movie to generate a plurality of second movies by a movie generating module; generating a thumbnail display by arranging small thumbnails, a first part of the small thumbnails corresponding to the still images, a second part of small thumbnails corresponding to the second movies; and outputting the generated thumbnail display to a video display device by an output module.

### BRIEF DESCRIPTION OF DRAWINGS

A general architecture that implements the various feature of the present invention will now be described with reference to the drawings. The drawings and the associated descriptions are provided to illustrate embodiments of the present invention and not to limit the scope of the present invention.

Fig. 1 illustrates an exemplary appearance of a television according to a first embodiment.

Fig. 2 illustrates an example of a thumbnail display according to the first embodiment.

Fig. 3 illustrates an example of an internal hardware configuration of the television according to the first embodiment.

Fig. 4 illustrates an example of a functional configuration of the television according to the first embodiment.

Fig. 5 illustrates an example of a thumbnail display according to the first embodiment.

Fig. 6 illustrates an example of a thumbnail display according to the first embodiment.

Fig. 7 illustrates an exemplary flow of a thumbnail display process according to the first embodiment.

Fig. 8 illustrates an exemplary flow of a thumbnail display process according to the first embodiment.

Fig. 9 illustrates an example of a thumbnail display according to a second embodiment.

Fig. 10 illustrates an example of a functional configuration of a television according to the second embodiment.

### DETAILED DESCRIPTION

Various embodiments according to the present invention will be described hereinafter with reference to the accompanying drawings. In general, according to one embodiment of the present invention, there is provided a thumbnail generating device including: a still image generating module that extracts a part of a first movie to generate a plurality of still images; a movie generating module that extracts a part of the first movie to generate a plurality of second movies; a thumbnail display generating module that generates a thumbnail display to be displayed on a video display device by arranging a plurality of small thumbnails, a first part of the small thumbnails corresponding to the still images, a second part of small thumbnails corresponding to the second movies; and an output module that outputs the generated thumbnail display to the video display device.

Hereinafter, embodiments of the invention will be described with reference to the drawings.

(First Embodiment)

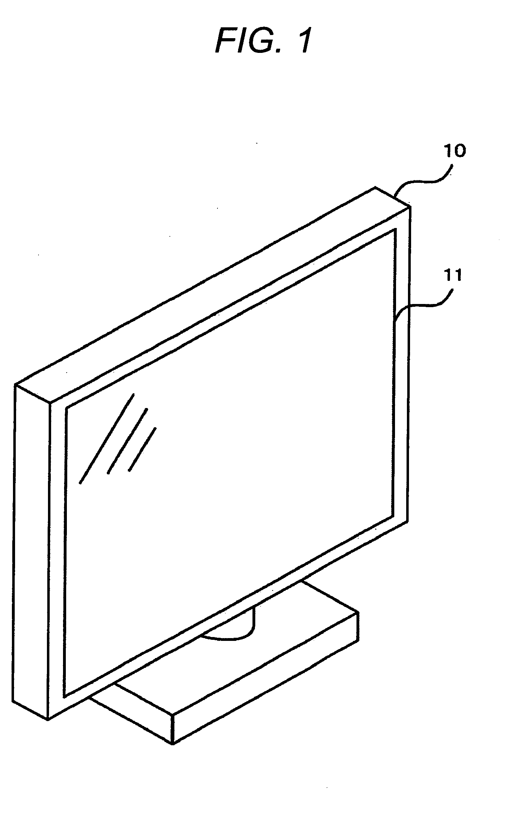

A thumbnail generating device according to a first embodiment of the invention will be described with reference to Fig. 1 to Fig. 8.

Fig. 1 illustrates an exemplary appearance of a television 10 according to the embodiment. Fig. 1 shows the television 10 and an LCD 11.

The television 10 is, for example, a digital television, and has a function of receiving television broadcasting transmitted from broadcasting stations and outputting video information thereof to a user. The television 10 has a storage medium, and serves as a thumbnail generating device that reproduces media data stored in the storage medium to output to the user.

The LCD 11 is, for example, a liquid crystal display, and is a display device for the television 10. The LCD 11 has a function of outputting image information of the television 10 to the user. Although the liquid crystal display is exemplified, for example, a CRT (Cathode Ray Tube), a PDP (Plasma Display Panel), and the like are conceivable as other display devices.

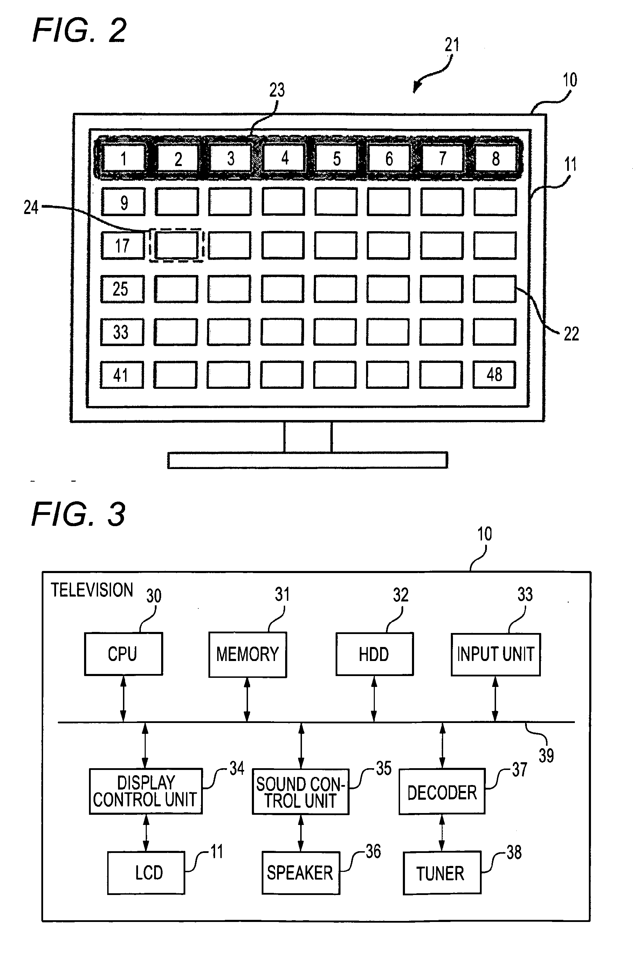

Fig. 2 illustrates an example of thumbnail display according to the embodiment. Fig. 2 shows the television 10, the LCD 11, thumbnail display 21, small thumbnails 22, a movie area 23, and a selection area 24.

In the embodiment, a case where a user selects a part which the user wants to watch from a movie divided into a plurality of chapters using the thumbnail display, and the user watches the selected movie on the full screen of the LCD 11 is described by way of example. The user finds the part which the user wants to watch by the thumbnail display 21, and selects the small thumbnail 22 as the part which the user wants to watch by the selection area 24. Then, the user can watch the chapter including the display represented on the small thumbnail 22 on the full screen of the LCD 11.

The thumbnail display 21 includes a plurality of small thumbnails 22, and is displayed on the LCD 11. In the embodiment, the thumbnail display 21 consists of 48 small thumbnails 22 arranged lengthwise 6 x widthwise 8. The number of small thumbnails 22 is an example, and is not limited thereto.

The small thumbnails 22 constitute the thumbnail display 21, and a movie which the user wants to watch is displayed for each chapter by a still image or a movie of a part of the chapter. As shown in Fig. 2 by numbers, Chapter 1, Chapter 2, ..., Chapter 48 are sequentially displayed by the small thumbnails 22 from the top left to the bottom right.

The movie area 23 is an area where the small thumbnails 22 display the chapters by movies. In the embodiment, the movie area 23 has a size including 1 whole widthwise line of the thumbnail display 21, the small thumbnails 22 in the movie area 23 display the chapters by movies, and the small thumbnails 22 which are not included in the movie area 23 display the chapters by still images. The user can easily confirm which part is displayed by a movie due to the movie area 23.

The selection area 24 is an area selected from the small thumbnails 22 of the thumbnail display 21, the user moves the area to select the small thumbnail 22 displaying the chapter which the user wants to watch, and thus the user can watch the movie of the chapter displayed on the selected small thumbnail 22 on the full screen of the LCD 11.

As described above, the user confirms the display of the chapters of the movie by the thumbnail display 21, and selects the small thumbnail 22 displaying the chapter which the user wants to watch, thereby watching the desired chapter.

Fig. 3 illustrates an example of an internal hardware configuration of the television 10 according to the embodiment. Fig. 3 shows the television 10, a CPU 30, a memory 31, a HDD 32, an input unit 33, a display control unit 34, the LCD 11, a sound control unit 35, a speaker 36, a decoder 37, a tuner 38, and a bus 39.

The CPU 30 is a central processing unit, and controls the whole television 10. The CPU 30 has a function of performing a given process by executing the program.

The memory 31 is a nonvolatile storage medium formed of a semiconductor memory. Various programs executed by the CPU 30 are stored in the memory 31. In the embodiment, a thumbnail display application program and a movie reproducing application program are stored therein. The display based on the thumbnail display 21 is performed by executing the thumbnail display application program, and the reproduction of the movie on the full screen of the LCD 11 is performed by executing the movie reproducing application program.

The HDD 32 is a nonvolatile mass storage medium such as a hard disk drive. The HDD 32 contains media data of a movie to be output by the television 10.

The input unit 33 has a function of inputting an operation instruction as an electrical signal from a user to the television 10. As the input unit 33, for example, a reception unit receiving an operation signal from a user operation button provided in the television 10 or a remote-operable remote controller is conceivable. The user can operate the television 10 using the remote controller or the like, and select the channels to be watched of the television 10 through the input unit 33. The user operation such as the movement of the selection area 24 is input from the input unit 33.

The display control unit 34 forms an image to be displayed by the television 10 based on a portrayal instruction from the CPU 30, image information decoded by the decoder 37, or video information such as media data stored in the HDD 32, and displays the image on the LCD 11.

The sound control unit 35 generates sound to be output by the television 10 based on an instruction from the CPU 30, sound information decoded by the decoder 37, or sound information such as media data stored in the HDD 32, and controls the speaker 36 to output the sound.

The speaker 36 is a sound output device, and has a function of outputting sound information of the television 10 to the user.

The decoder 37 has a function of decoding broadcasting waves received by the tuner 38 and converting them into signals from which the television 10 can output as image and sound.

The tuner 38 has a function of receiving broadcasting waves transmitted from the broadcasting station.

The bus 39 communicably connects modules in the television 10 to one another.

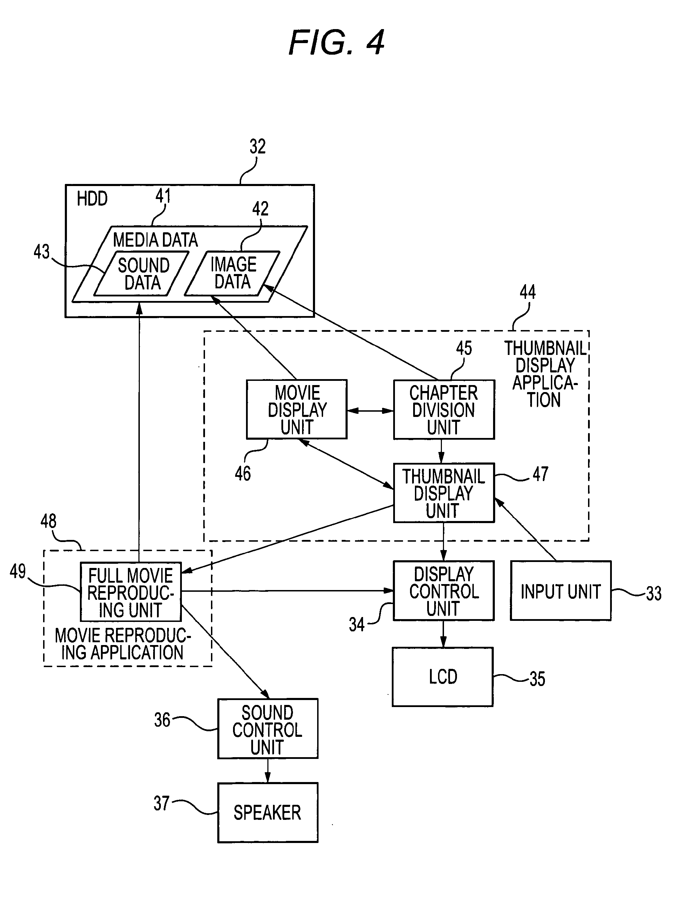

Fig. 4 illustrates an example of a functional configuration of the television 10 according to the embodiment. Fig. 3 shows the HDD 32, the input unit 33, the display control unit 34, the LCD 11, media data 41, image data 42, sound data 43, a thumbnail display application 44, a chapter division unit 45, a movie display unit 46, a thumbnail display unit 47, a movie reproducing application 48, and a full movie reproducing unit 49. In the embodiment, a display process of the thumbnail display 21 and a selection process of a chapter for display are performed by the thumbnail display application 44, and a reproduction process on the full screen of the LCD 11 of the selected chapter is performed by the movie reproducing application 48.

The media data 41 that is stored in the HDD 32 is a movie data including the image data 42 and the sound data 43. The image data 42 can be output by the LCD 11, and the sound data 43 can be output by the speaker 36.

The thumbnail display application 44 is executed by the CPU 30 to perform the thumbnail display 21 of a movie on the LCD 11. The thumbnail display application 44 includes the chapter division unit 45, the movie display unit 46, and the thumbnail display unit 47.

The chapter division unit 45 has a function of dividing the continuous movie of the media data 41 into chapters. The chapter division unit 45 accesses the HDD 32 to acquire the media data 41, and divides the continuous movie of the media data 41 into chapters. In the embodiment, the chapter division unit 45 divides the movie into chapters at a given time interval from a start time of the movie, and gives chapter numbers that are numbers used for the identification of the chapters in order from the first chapter. When the division of the chapters is completed, the chapter division unit 45 transmits still images (I frame of the start of each chapter in the embodiment) as the start of the chapter corresponding to the chapters, information of the start times of the chapters, and information of the chapter numbers, to the thumbnail display unit 47. The information is transmitted to the movie display unit 46.

When the movie display unit 46 receives the information from the chapter division unit 45, the movie display unit 46 acquires a part of the image data 42 from the HDD 32 based on the information and has a function of generating a movie for a given time (or the whole) from the start of each chapter.

The thumbnail display unit 47 has a function of generating images of the thumbnail display 21 displayed on the LCD 11, the movie area 23, and the selection area 24. The thumbnail display unit 47 arranges the still images of the chapters acquired from the chapter division unit 45 as the small thumbnails 22 in chapter order, and overlaps it with the display of the movie area 23 and the selection area 24, thereby generating the thumbnail display. The chapter numbers of the chapters included in the movie area 23 are transmitted to the movie display unit 46. The movie display unit 46 receiving the chapter numbers generates movies from the chapter start times corresponding to the transmitted chapter numbers, and transmits the generated movies to the thumbnail display unit 47. The thumbnail display unit 47 receiving the movies of the chapters included in the movie area 23 displays the small thumbnails 22 corresponding to the chapters included in the movie area 23 as movies, using the movies received from the movie display unit 46. At the time of display, the image signals are transmitted to the display control unit 34, the small thumbnails 22 are displayed by the LCD 11. When the movie area 23 is moved, the above-described process is performed on the chapter displayed by the small thumbnail 22 included in the moved spot. The thumbnail display unit 47 has a function of acquiring the movies from the movie area 23, displaying the movies by the small thumbnails 22.

The thumbnail display unit 47 also has a function of detecting that a specific small thumbnail 22 is selected from the input unit 33 by the selection area 24, transmitting the start time of the selected chapter to the full movie reproducing unit 49, and ending the thumbnail display application 44.

The movie reproducing application 48 is an application executed by the CPU 30 at the time of displaying the movie on the full screen of the LCD 11. The movie reproducing application 48 has the full movie reproducing unit 49.

When the full movie reproducing unit 49 receives the start time of the selected chapter selected by the selection area 24 from the thumbnail display unit 47, the full movie reproducing unit 49 acquires the media data 41 from the HDD 32, and has a function of reproducing the movie from the start time by the full screen of the LCD 11. The full movie reproducing unit 49 transmits signals to the display control unit 34 and the sound control unit 35, and controls the LCD 11 and the speaker 36 to output the video and sound of the movie.

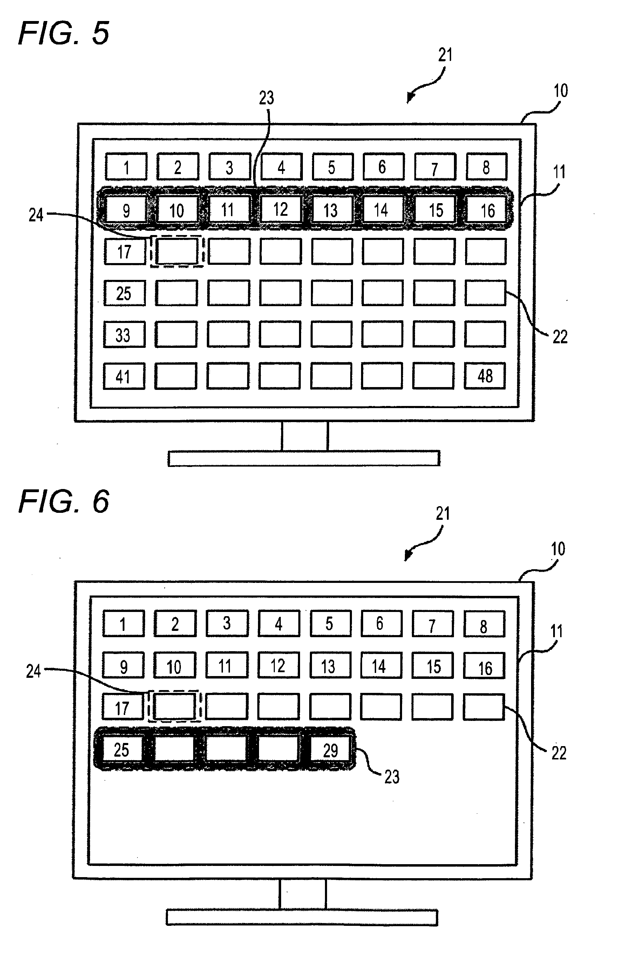

Fig. 5 illustrates an example of the thumbnail display according to the embodiment. Fig. 5 shows the television 10, the LCD 11, the thumbnail display 21, the small thumbnail 22, and the movie area 23, and the selection area 24.

In the embodiment, the movie area 23 can be moved up and down for each row. Fig. 5 shows an example of a display in the case where the movie area 23 is moved down by one row in the thumbnail display 21 shown in Fig. 2.

In the embodiment, the movie area 23 can moved up and down. After the movie area 23 is moved, the movie display is performed for the small thumbnails 22 (Chapter 9 to Chapter 16 in Fig. 5) included in the moved movie area 23.

As for the movement of the movie area 23, several movement methods are conceivable. In the embodiment, two movement methods of the movie area 23 are exemplified, and the methods will be described hereinafter.

Method 1: Moving down by one row for every lapse of a given time.

Method 2: Moving down or up according to the instruction from the user.

In Method 1, the thumbnail display unit 47 monitors the lapse of the given time, and moves the movie area 23 down when the given time elapses.

In Method 2, the movie area 23 is moved down or up according to the movement instruction from the user through the input unit 33. The two movement methods of the movie area 23 will be described later, and the movement methods are examples. Of course, other methods are conceivable, and the invention is not limited thereto.

Fig. 6 illustrates an example of the thumbnail display according to the embodiment. Fig. 6 shows the television 10, the LCD 11, the thumbnail display 21, the small thumbnail 22, the movie area 23, and the selection area 24.

In the thumbnail display 21 according to the embodiment, 48 small thumbnails 22 are arranged by way of example. When the number of chapters of the movie is less than 48 or more than 48, the thumbnail display is performed with the small thumbnails 22 less than 48. For example, when the number of chapters is less than 48, all the chapters are arranged from the top left and the thumbnail display 21 is performed up to part of the way across the screen as shown in Fig. 6. When the number of chapters is more than 48, the number of total small thumbnails 22 is increased as a plurality of pages on the screen for the thumbnail display, thereby performing the display of all the chapters. When the display based on the plurality of pages is performed, 48 chapters from the start are displayed on the first page as the small thumbnails 22 and the next chapters from the 49th chapter are displayed on the second page and thereafter. With such a configuration, the last page is displayed as shown in Fig. 6.

Fig. 6 shows that 29 small thumbnails 22 are displayed as the thumbnail display 21, and the movie area 23 is displayed at the bottom row of the thumbnail display 21. The movie area 23 includes the small thumbnails 22 displaying the last chapter as shown in Fig. 6.

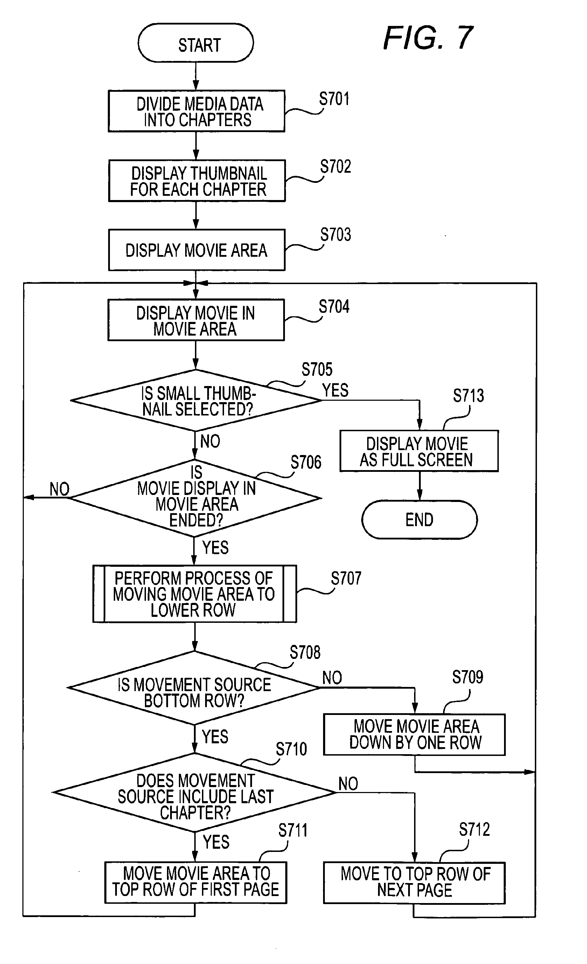

Fig. 7 illustrates an exemplary flow of the thumbnail display process according to the embodiment. Fig. 7 shows a case of the movement process based on Method 1 at the time of moving the movie area 23 by way of example.

First, the chapter division unit 45 accesses the HDD 32, acquires the media data 41 stored in the HDD 32, and performs the chapter division (S701). After the chapter division, the chapter division unit 45 transmits information regarding the start times of the chapters in the still images and the whole movies at the head of the chapters corresponding to the chapter numbers, to the thumbnail display unit 47. In this case, the chapter division unit 45 transmits the start time information of the chapters corresponding to the chapter numbers, to the movie display unit 46.

The thumbnail display unit 47 generates an image of the thumbnail display 21 based on the information acquired from the chapter division unit 45, and displays the image on the LCD 11 through the display control unit 34 (S702). In addition, the thumbnail display unit 47 generates the selection area 24 and the movie area 23, and displays them on the LCD 11 (S703). The thumbnail display unit 47 sends instructions to transmit the movie data corresponding to the chapters of the small thumbnails 22 within the movie area 23 to the movie display unit 46. The movie display unit 46 transmits the movie data, of the chapters instructed to be transmitted, to the thumbnail display unit 47, and the thumbnail display unit 47 receiving the movie data displays the movies of the chapters on the small thumbnails 22 in the movie area 23 (S704).

The thumbnail display unit 47 determines whether or not the selection of the small thumbnail 22 is performed from the input unit 33 (S705). When the small thumbnail 22 is not selected (No), the thumbnail display unit 47 determines whether or not all the movies displayed on the small thumbnails 22 in the movie area 23 are reproduced (S706). In S706, when the reproduction of all the movies is completed (Yes), the thumbnail display unit 47 performs a movement process to the lower row of the movie area 23 (S707). When a movement source (where the movie area 23 has existed) is not at the bottom row of the thumbnail display 21 (S708: No), the thumbnail display unit 47 moves the movie area 23 to the lower row by one row (S709). In S708, when the movement source is at the bottom row of the thumbnail display 21 (Yes), the thumbnail display unit 47 determines whether or not the small thumbnails 22 in the movie area 23 of the movement source display the last chapter of a movie (S710). When the small thumbnail 22 displays the last chapter (Yes), the movie area 23 is moved to the top row of the thumbnail display 21 on the first page (S711). In S710, when the small thumbnail 22 does not display the last chapter (No), the thumbnail display unit 47 moves the display of the movie area 23 to the top row on the next page (S712). In S706, when the reproduction of all the movies is not completed, when the process of S709 is completed, when the process of S711 is completed, and when the process of S712 is completed, the process flow returns to S704.

In S705, when the small thumbnail 22 is selected (Yes), the thumbnail display unit 47 transmits the start time information of the selected chapter to the full movie reproducing unit 49, and the full movie reproducing unit 49 displays the movie of the selected chapter on the full screen of the LCD 11 (S713). Then, the process of S713 is completed, thereby ending a series of a process flow of the thumbnail display process.

When using Method 1 as the movement method of the movie area 23, all the small thumbnails 22 are finally displayed in movie. The user can watch the movies for all the small thumbnails 22. In addition, the user can confirm the thumbnail display 21 without considering about the movement of the movie area 23.

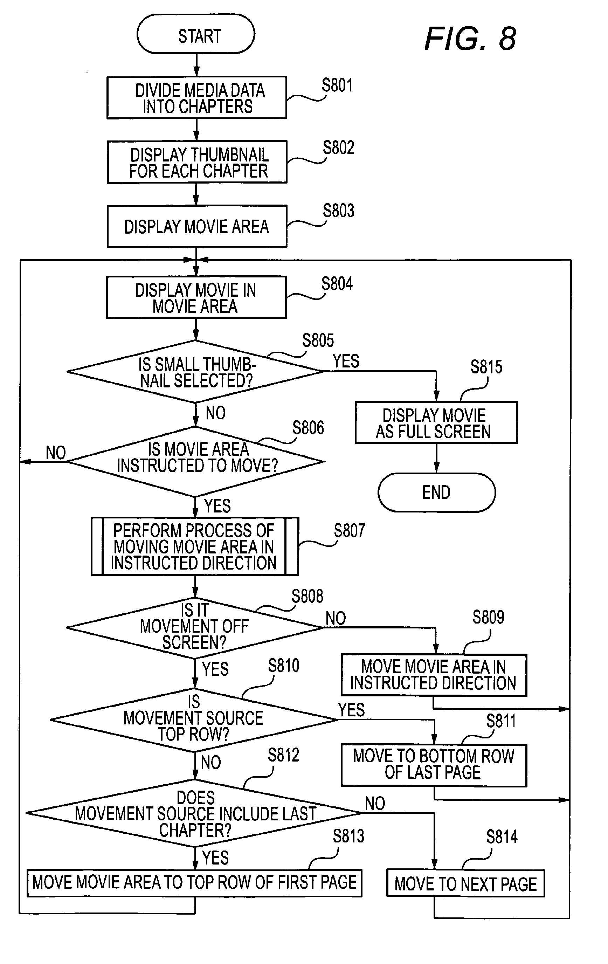

Fig. 8 illustrates an exemplary flow of the thumbnail display process according to the embodiment. Fig. 8 shows a case of the movement process based on Method 2 at the time of performing the thumbnail display by way of example. In the process flow shown in Fig. 8, S801 to S805 are the same as S701 to S705 in Fig. 7, and thus the description thereof is omitted.

In S805, when the small thumbnail 22 is not selected, the thumbnail display unit 47 determines whether or not the movement instruction of the movie area 23 is received from the user (S806). The determination of whether or not the movement instruction is received is determination of whether or not the instruction is received by the input unit 33. In S806, when the movement instruction of the movie area 23 is received (Yes), the thumbnail display unit 47 performs the movement process of the movie area 23 according to the instruction from the user (S807). When the movement according to the movement instruction of the movie area 23 from the user is not a direction off the screen (S808: No), the movie area 23 is moved in the direction instructed by the user (S809). In this case, the movement of the movie area 23 off the screen means that, for example, the upward movement is instructed when the movie area 23 is at the top row of the thumbnail display 21 or the downward movement is instructed when the movie area 23 is at the bottom row of the thumbnail display 21. In S808, when the movement instruction of the movie area 23 from the user is the direction off the screen (Yes), the thumbnail display unit 47 determines whether or not the position of the movement source of the movie area 23 is at the top row of the thumbnail display 21 (S810). In S810, when it is determined that the position is at the top row (Yes), the thumbnail display unit 47 moves the movie area 23 to the bottom row (the bottom row on the first page when the thumbnail display 47 is only one page) on the last page of the thumbnail display 21 (S811). In S810, when the position is not at the top row (No), the thumbnail display unit 47 determines whether or not the small thumbnails 22 in the movie area 23 of the movement source include the last chapter (S812). In S812, when it is determined that the small thumbnails 22 include the last chapter (Yes), the thumbnail display unit 47 moves the movie area 23 to the top row on the first page of the thumbnail display 21 (s813). In S812, when it is determined that the small thumbnails 22 do not include the last chapter, the thumbnail display unit 47 moves the movie area 23 to the top row on the next page of the thumbnail display 21 (S814). In S806, when the movement instruction of the movie area 23 is not received, when the process of S809 is completed, when the process of S811 is completed, when the process of S813 is completed, and when the process of S814 is completed, the process flow returns to S804.

In S805, when the small thumbnail 22 is selected (Yes), the thumbnail display unit 47 transmits the information of the selected chapter to the full movie reproducing unit 49, and the full movie reproducing unit 49 displays the movie of the selected chapter on the full screen of the LCD 11 (S815). Then, the process of S815 is completed, thereby ending a series of a process flow of the thumbnail display process.

When using Method 2 as the movement method of the movie area 23, the user can immediately confirm the movie of the small thumbnail 22 which the user wants to confirm by the operation, thereby improving convenience.

As described above, it is possible to perform the thumbnail display process using Method 1 and Method 2. The thumbnail display process may be performed by any one of Method 1 and Method 2, and these methods may be combined with each other.

As the division method of the chapters in the embodiment, the case of performing the chapter division at given time intervals has been described by way of example, but the invention is not limited thereto. Another division method is conceivable. For example, a method of performing the chapter division at the time of scene change, or a method of detecting a roar and performing the chapter division when the volume of the roar is higher than a given value is conceivable.

In the embodiment, the movie area 23 has a size covering the widthwise one row of the thumbnail display 21, but the invention is not limited thereto. The movie area 23 may have a size including only two small thumbnails 22, and may have a size lager than that of the embodiment (covering two or more rows), and various sizes are conceivable. The movie area 23 is not limited to one area, but there may be a plurality of movie areas. The shape of the movie area 23 is not limited to cover only the one row widthwise, but may be formed to cover the other row.

According to the thumbnail generating device of the embodiment, movie-display is performed on a part of the thumbnail display, and thus it is possible to display the thumbnail in movie without excessively increasing the information processing amount of the video reproducing device. Accordingly, the user can find the part which the user wants to watch by the thumbnail display based on the movies.

(Second Embodiment)

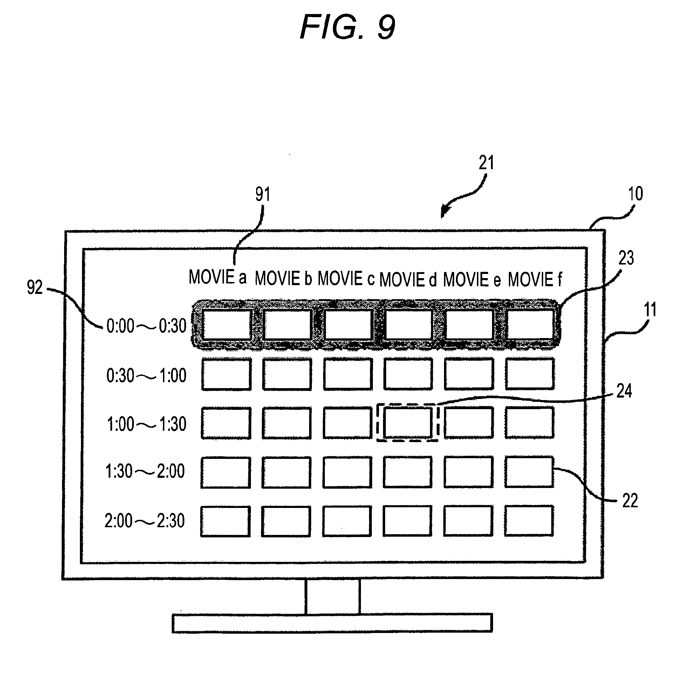

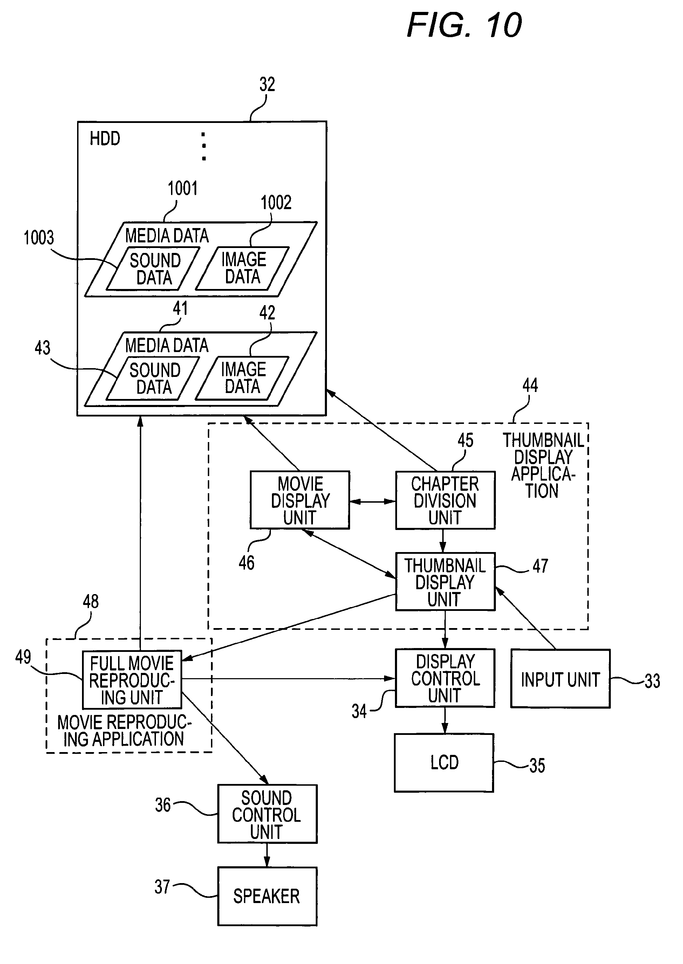

A thumbnail generating device according to a second embodiment of the invention will be described with reference to Fig. 9 and Fig. 10.

Fig. 9 illustrates an example of a thumbnail display according to the embodiment. Fig. 9 shows a television 10, an LCD 11, thumbnail display 21, small thumbnails 22, a movie area 23, a selection area 24, movie titles 91, and chapter times 92.

In the embodiment, a case of selecting a target scene of a movie which a user wants to watch from a plurality of movies using the thumbnail display 21 is conceivable.

In the embodiment, as for the plurality of movies, still images or movies as a part thereof are displayed by the thumbnail display 21. In the thumbnail display 21, the small thumbnails 22 corresponding to chapters in movie is arranged in a column, and the small thumbnails 22 of the movies different from one another are arranged in columns. In the embodiment, the chapters of the movies are subjected to a division process at the same time interval, and are arranged from the first chapter in order from the top. With such a configuration, as shown in Fig. 9, the movies are arranged in columns, and the same time band portions of the movies are arranged in rows.

The movie titles 91 are titles of the displayed movies, and the still images of the movies or the small thumbnails 22 of the movies corresponding to the movie titles 91 are arranged and displayed under the movie titles 91. The movie titles 91 may be represented by the titles of the movies, or may be represented so that the user can recognize at least that the small thumbnails 22 of each different movie are arranged in columns as shown in Fig. 9.

The chapter times 92 represent start times and end times of the small thumbnails 22 arranged in the same widthwise row.

The movie area 23 include the small thumbnails 22 at the same widthwise row of the thumbnail display 21, and is moved in the same manner as that of the first embodiment. The small thumbnails 22 at the same widthwise row are included in the movie area 23, and thus the same time band (display from the start time with the same amount of time having elapsed) of each movie is displayed in movie.

For example, in Fig. 9, the display representing 30 minutes from the start time of a movie such as Movie a is displayed on the top left small thumbnail 22. Since the small thumbnail 22 is included in the movie area 23, the small thumbnail 22 is displayed by in movie.

Fig. 10 is a block diagram illustrating an example of a functional configuration of the television 10 according to the embodiment. Fig. 10 shows an HDD 32, an input unit 33, a display control unit 34, the LCD 11, media data 41, image data 42, sound data 43, media data 1001, image data 1002, sound data 1003, a thumbnail display application 44, a chapter division unit 45, a movie display unit 46, a thumbnail display unit 47, a movie reproducing application 48, and a full movie reproducing unit 49.

The block diagram illustrating the example of the functional configuration according to the embodiment is substantially the same as that of Fig. 4. A different point is that a plurality of media data are stored in the HDD 32, and that the functions of the chapter division unit 45, the movie display unit 46, and the thumbnail display unit 47 are different from one another.

In the first embodiment, the data is acquired from a single piece of media data. However, in the functional blocks according to the present embodiment, the data are acquired from a plurality of media data. For this reason, together with the chapter number, the chapter start time, the information of the still images or movies in each chapter transmitted and received in the first embodiment, and information about what kind of media data the chapter is a movie stored in is transmitted and received.

The HDD 32 has a plurality of media data such as the media data 41 and the media data 1001. In the embodiment, in Fig. 9, six movies such as Movie a to Movie f are displayed, and there is media data for each movie. Accordingly, there are the six media data, but only two media data of the media data 41 and the media data 1001 are shown in Fig. 9. The other four media data are omitted.

In the embodiment, the chapter division unit 45 accesses the HDD 32, acquires the media data, and performs the chapter division process of the movie. The chapter division unit 45 associates each of the chapters with the chapter number, the chapter start time, the still images and movies in each chapter, and the information about the kind of media data that the chapter is a movie of, and has a function of transmitting this information to the thumbnail display unit 47 and the movie display unit 46.

The thumbnail display unit 47 arranges the small thumbnails 22 based on the information received from the chapter division unit 45, generates the thumbnail display 21, and generates a display image by overlapping the movie titles 91, the chapter times 92, the movie area 23, and the selection area 24 with the thumbnail display 21. The information about the kind of media data that the chapter displayed on the small thumbnails 22 included in the movie area 23 is a movie of, and the chapter numbers are transmitted to the movie display unit 46.

When the movie display unit 46 receives the information from the thumbnail display unit 47, the movie display unit 46 selects the media data stored in the HDD 32 from the information about the kind of media data that the chapter is a movie of, acquires the image data corresponding to the chapter, generates a movie from the start of each chapter for a given time (or the whole time), and transmits the movie information to the thumbnail display unit 47.

The thumbnail display unit 47 receiving the movie information generates the small thumbnails 22 included in the movie area 23 as the movie display using the received movie information, and the display control unit 34 displays the small thumbnails 22 on the LCD 11.

When any one of the small thumbnails 22 is selected, the information about the kind of media data that the movie is a movie of and the information of the start time of the chapter are transmitted to the full movie reproducing unit 49. Then, the thumbnail display unit 47 completes the thumbnail display 21. The full movie reproducing unit 49 performs the movie display from the chapter start time selected on the full screen of the LCD 11 based on the information about the kind of media data that the movie is a movie of and the start time of the chapter.

In the embodiment, as the chapter division method, the chapter division is performed for all the movies at every given time by way of example, but the invention is not limited thereto. For example, a method of performing the chapter division at the time of scene change, or a method of detecting a roar and performing the chapter division when the volume of the roar is higher than a given value are conceivable. In addition, when the displayed movies are originally chapter-divided, the thumbnail display may be performed using the originally-divided chapters without performing the chapter division again.

In the embodiment, the television is exemplified as the thumbnail generating device, but the invention is not limited thereto. Other thumbnail generating devices such as an HDD player and a DVD (Digital Versatile Disk) player are conceivable.

In the embodiment, a part of the small thumbnails in the thumbnail display are displayed in movie. If all the small thumbnails are displayed in movie, the user gets an impression of disorder from the whole screen and thus it may be difficult to see them. In the embodiment, since only a part is displayed in movie, it is possible to perform the thumbnail display in an orderly manner.

According to the thumbnail display by the thumbnail generating device of the embodiment, a part of the thumbnail display is displayed in movie, and thus the user can easily find the part which the user wants to watch from the plurality of movies. In the embodiment, the chapters of each movie are displayed on the small thumbnails in one column. However, the invention is not limited thereto, different movies (or still images corresponding thereto) may be respectively displayed in all the small thumbnails. In this case, it is conceivable that the display can be performed with the same manner as that of the embodiment.

The invention is not limited to the above-described embodiments. In the embodying step, the constituent elements may be variously modified and embodied within the scope of the invention. In addition, it is possible to form various modifications by appropriately combining a plurality of constituent elements. For example, several constituent elements may be omitted from the former constituent elements described in the embodiments. Moreover, the constituent elements related to the different embodiments may be appropriately combined.

According to an aspect of the invention, a part of the thumbnail display is displayed in movie, and thus it is possible to provide a thumbnail generating device and a thumbnail generating method capable of generating a thumbnail display to be displayed in movie without increasing the information processing amount for display.

## Claims

1. A thumbnail generating device comprising:
a still image generating module that extracts a part of a first movie to generate a plurality of still images;
a movie generating module that extracts a part of the first movie to generate a plurality of second movies;
a thumbnail display generating module that generates a thumbnail display to be displayed on a video display device by arranging a plurality of small thumbnails, a first part of the small thumbnails corresponding to the still images, a second part of small thumbnails corresponding to the second movies; and
an output module that outputs the generated thumbnail display to the video display device.

2. The thumbnail generating device of Claim 1, further comprising:
a movie area generating module that generates a movie area on the thumbnail display, the second part of the small thumbnails corresponding to the second movies being included within the movie area,
wherein the output module outputs the generated movie area to the video display device.

3. The thumbnail generating device of Claim 2, further comprising:
a movie area moving module that moves the movie area within the thumbnail display so that the movie area include the first part of the small thumbnails corresponding to the still images,
wherein the thumbnail display generating module generates, upon a movement of the movie area, a thumbnail display so that the small thumbnails included in the movie correspond to the second movies.

4. The thumbnail generating device of Claim 1, further comprising:
a selection module that selects one of the small thumbnails of the thumbnail display; and
a generation module that generates a first movie display following the still image or the second movie corresponding to the selected small thumbnail so as to be displayed in a size larger than that of the small thumbnail,
wherein the output module outputs the generated first movie display to the video display device.

5. The thumbnail generating device of Claim 1, further comprising:
a chapter division module that divides the first movie into chapters,
wherein the still image generating module extracts a third movie included in the divided chapters to generate the still images, and
wherein the movie generating module extracts the third movie included in the divided chapters to generate the second movies.

6. A thumbnail generating device comprising:
a still image generating module that extracts respective parts of a plurality of first movies to generate a plurality of still images, the first movies being different from one another;
a movie generating module that extracts respective parts of the first movies to generate a plurality of second movies;
a thumbnail display generating module that generates a thumbnail display to be displayed on a video display device by arranging a plurality of small thumbnails, a first part of the small thumbnails corresponding to the still images, a second part of small thumbnails corresponding to the second movies; and
an output module that outputs the generated thumbnail display to the video display device.

7. A thumbnail generating method comprising:
extracting a part of a first movie to generate a plurality of still images by a still image generating module;
extracting a part of the first movie to generate a plurality of second movies by a movie generating module;
generating a thumbnail display by arranging small thumbnails, a first part of the small thumbnails corresponding to the still images, a second part of small thumbnails corresponding to the second movies; and
outputting the generated thumbnail display to a video display device by an output module.
